# EUROPEAN PATENT SPECIFICATION

(11) **EP 0 328 146 B1**
(45) Date of publication and mention of the grant of the patent: **20.09.1995**
(21) Application number: 89102368.1
(22) Date of filing: 10.02.1989
(51) Int. Cl.: G01N 30/60

(54) **A high pressure column assembly for a liquid chromatograph system**
Säule für Hochdruck-Flüssigkeitschromatographie
Colonne pour chromatographie liquide à haute pression

(30) Priority: 12.02.1988 US 155394
(43) Date of publication of application: 16.08.1989
(73) Proprietor: THE PERKIN-ELMER CORPORATION, Norwalk Connecticut 06859-0181 (US)
(72) Inventor: America, William G., Danbury Connecticut 06810 (US)
(74) Representative: Grünecker, Kinkeldey, Stockmair & Schwanhäusser Anwaltssozietät

(56) References cited:
- EP-A- 0 205 002
- DE-A- 2 945 180
- US-A- 3 682 315
- US-A- 3 855 130
- US-A- 3 904 527
- PATENT ABSTRACTS OF JAPAN, vol. 11, no. 366 (P-641)[2813], 28th November 1987;& JP-A-62 138 751

## Description

The present invention finds application in the field of liquid chromatography and relates to a column assembly coupled between a liquid chromatograph injector and a detector.

### Background of the Invention

In the field of liquid chromatography, a liquid (called the "mobile phase") is pumped under high pressure through a separation or partition column, which comprises a tubular member packed with a suitable particulate solid material (the "stationary phase"). As the liquid phase, including a small sample to be separated or assayed, passes through the column the sample components in the liquid phase separate from each other. As the liquid phase elutes from the column, the sample is separated into bands whose concentration is then measured by a suitable detector.

As can be seen from either of documents EP-A-0 205 002 and US-A-3 855 130, a liquid chromatography column assembly comprises a cylindrical separation column, a liquid permeable discoid frit and a column coupling assembly for each end of the column.

A liquid chromatograph column, in some user situations, may need to be changed frequently. Such column changing may be necessary, for example, in order to permit testing of a sample with a column having a different stationary phase. Most column changes are made by removing the column from the tubing which couples it to the detector and the sample injector. This usually necessitates the use of wrenches, a fact which in some industrial settings may require the chromatographer to call a maintenance person to perform the column change. Moreover, the use of a wrench or other tool, which is required to tighten the fitting to make it leak proof at typical liquid chromatograph operating pressures of from 41N/mm² to 69N/mm² (6,000 to 10,000 psi), causes wear on the connector nut and ferrule The cumulative wear eventually causes the fitting to fail under liquid chromatograph operating pressures and require replacement.

The column assembly arrangement of EP-A-0 205 002 overcomes, to some extent, this problem. The column coupling assembly comprises a thrust member positioned adjacent the end of the column next to and engaging with the frit and has a sealing gasket disposed on an outside tapered surface thereof; a hollow cylindrical nut encircling the column having an external threaded portion; and a hollow cylindrical collar member having an internal threaded portion engaging with the external threaded portion of the cylindrical nut to complete a fixed assembly.

Although this prior art allows a relatively easy column change by simple unscrewing and re-screwing of the collar member nevertheless, the present invention desires to provide a liquid chromatograph column assembly, which permits the column to be changed without causing significant wear on the sealing gasket member even at the high operating pressures.

### Summary of the Invention

Thus, it was the object of the invention to provide a new and improved liquid chromatograph column assembly, which will permit changing the column without requiring the use of hand tools and, at the same time, prevents any significant wear on the sealing gasket member. The present invention solves this task by a liquid chromatography column assembly comprising the features set out in Claim 1.

Briefly, the present invention is directed to a new and improved high pressure column assembly for a liquid chromatograph, which includes a hollow cylindrical column fabricated of liquid impervious material. Stationary phase packing material is disposed within the column and a liquid permeable discoid frit is disposed at each end of the column to retain the packing material and diffuse the flow of mobile phase entering the column.

The column assembly includes a cylindrical housing enveloping the column and is provided with identical couplings at each end. Each coupling assembly includes a tubular coupler member having at one end a radially outwardly extending annular flange. The coupler member is disposed coaxially with respect to the column with the front face of the flange in confronting relation to one end of the column. The front face of the flange contains a concentric annular groove radially positioned to be in apposition to the end of the column and to the outermost circumferential portion of the discoid frit. An annular gasket is disposed in the groove and projects beyond the front face of the flange.

Each coupling assembly also includes a hollow cylindrical collar member having a radially inwardly extending annular flange at one end, disposed in coaxial surrounding relation to the couple member and the housing, the inwardly extending flange of the collar member and outwardly extending flange of the couple member having radial dimensions such as to place the respective back faces of the flanges in apposition. The inner diameter of the collar member flange is sufficiently large to accommodate passage of the tubular member except for the outwardly extending flange thereof.

The collar member is threadedly coupled to the end of the column housing member whereby rotation of the collar member in one direction relative to the housing member produces axial relative displacement therebetween with concomittant movement of the flanges toward each other and the front face of the coupler member flange toward the column end with consequent compression of the gasket against the column end without substantial rotational displacement of the gasket relative to the column end.

There has thus been outlined rather broadly the more important features of the invention in order that the detailed description thereof that follows may be more readily understood, and in order that the present contribution to the art may be better appreciated. Additional features of the invention will be described more fully hereinafter. Those skilled in the art will appreciate that the conception on which this disclosure is based may readily be utilized as a basis for the design of other assemblies for carrying out the several purposes of the invention. It is important, therefore, that this disclosure be regarded as including such equivalent assemblies as do not depart from the scope of the invention as defined in the subjoined claims.

One embodiment of the invention has been chosen for purposes of illustration and description, and is shown in the accompanying drawings, forming a part of the specification.

### Brief Description of the Drawings

Fig. 1 is a block diagram of a typical liquid chromatograph which embodies the present invention;
Fig. 2 is an elevational view partially in axial section showing the high pressure column assembly constructed according to the concepts of the invention;
Fig. 3 is an axial sectional view through the coupler member;
Fig. 4 is an axial sectional view through the collar member; and
Fig. 5 is an axial sectional view through the housing member.

### Detailed Description of the Invention

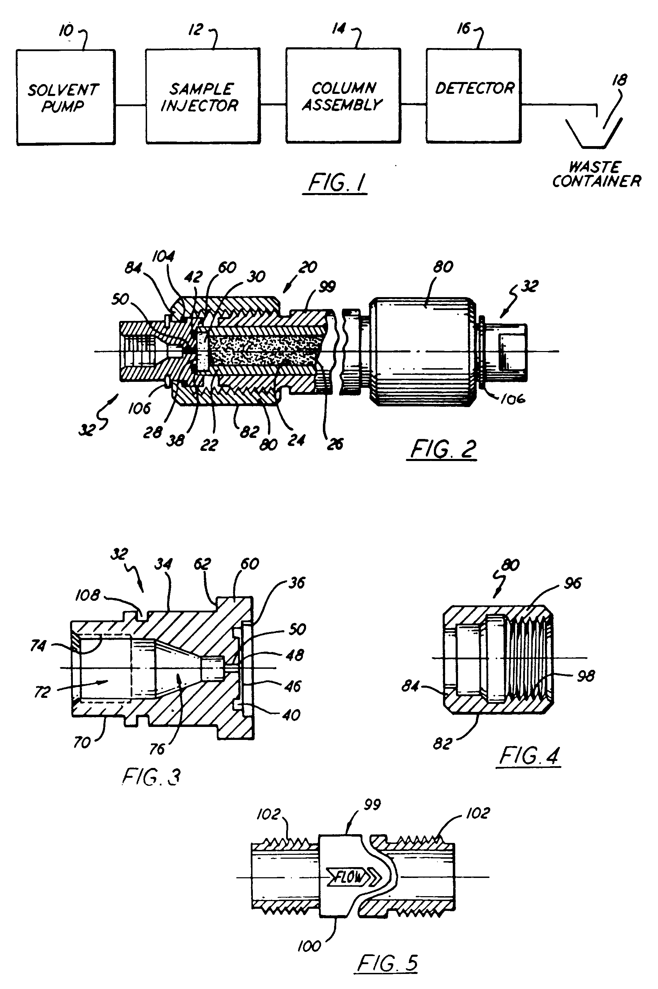

Referring now to Fig. 1, there is shown in schematic form a typical liquid chromatograph system. In such a typical system, a pump 10, commonly referred to as a solvent delivery pump, is provided for pumping a mobile phase through the system. The mobile phase is first pumped into a sample injector 12 which is utilized to put a fixed volume of an unknown liquid material into the flow of solvent. The solvent and the unknown are then pumped into the liquid chromatograph column assembly 14. The column assembly typically comprises a cylindrical column with appropriate fittings at opposite ends thereof for coupling to the injector 12 and to the detector 16.

The column contains a packing in the form of a solid particulate material appropriate to the substance being analyzed and having different affinities for its various constituents. During the flow of the mobile phase through the column, the time of passage of the individual constituents is retarded by a process of repetitive absorption and desorption by the stationary phase, the length of the delay (the "retention time") being characteristic of and different for each of the constituents. Consequently, the various constituents elute from the column at spaced time intervals and enter the detector 16 which reacts to the presence of the sample constituents in the mobile phase by generating a measurable signal proportional in its intensity to the concentration of the detected constituent. Thus, all in a manner well known in the art, with proper calibration of the instrument, one can determine from the detector output signal the exact mass of the constituent components of the sample injected through the injector and separated by the column 14. After passing through the detector, the solvent and sample are carried to an appropriate waste container as indicated at 18.

In a liquid chromatograph system contemplated by the present invention, the solvent pump typically develops a liquid pressure in the system which is often of the order of many tens of N/mm² (thousands of pounds per square inch). Liquid pressures may in some instances go as high as about 34N/mm² to about 69N/mm² (5,000 to about 10,000 pounds per square inch). Under such high liquid pressures, difficulties arise with respect to providing a leak proof system. Consequently, it is not infrequent that column coupling fittings are provided which require the use of hand or power tools in order to produce sufficient sealing pressure between the coupling members to prevent a system leak. This is particularly true with respect to the column end fittings associated with the inlet end of the column as the packing material within the column provides the greatest flow resistance to the flow of the mobile phase through a typical liquid chromatograph as illustrated in Fig. 1; hence the highest pressures in the system are experienced between the pump and the inlet side of the column.

Referring now to Fig. 2, one end of a cylindrical cartridge-type column assembly is illustrated generally at 20. Cartridge column assembly 20 includes a generally cylindrically shaped column 22 containing an axial bore 24 and made of a material which is not corroded by typical liquid chromatography solvents. Disposed within the central bore 24 of column 22 is a particulate packing material 26, the exact nature of which is not germane to the present invention but is well known in the art.

At opposite ends of column 22, the central bore 24 has an enlarged counterbore as illustrated at 28 to provide a recess designed to receive a frit 30 which is press fitted or otherwise secured therein by any suitable mechanical retaining means. Frit 30 retains the particulate matter 26 within the central bore 24 and also diffuses the incoming mobile phase. Frit 30, made of a conventional material, has a greater porosity than does the packing 26. Consequently, liquid passing through the system can pass more easily through frit 30 than it can through packing material 26.

The column coupling assembly includes a generally hollow cylindrical coupler member 32, shown in enlarged detail in Fig. 3. At one end, member 32 has a cylindrical portion 34 carrying a radially outwardly extending coaxial annular flange 60. At the end remote from flange 60, coupler member 32 has a cylindrical portion 70 coaxial with and of smaller diameter than cylindrical portion 34. In operative assembly coupler member 32 is positioned in coaxial abutment with the end of column 22 so that the axis of the cylindrical portion 34 is coincident with the axis of cartridge column 20. The face 36 of flange 60 contains a concentric annular groove 40 in which is disposed an annular gasket member 42 (Fig. 1). Groove 40 is radially dimensioned so that it is in apposition to the end of column 22 and the outermost region of frit 30. As seen in Fig. 2, disposed within the annular groove 40 is a gasket member 42 made of a perfluoroelastomer such as "KAL-REZ NO. 1050" manufactured by Dupont, although a suitable gasket can be made from other similar materials. Alternate types of material should have compression characteristic similar to KAL-REZ NO. 1050 and be chemically inert in the solvents used in liquid chromatography. The gasket 42 is preferably press fitted into the groove 40, although a portion of the gasket 42 when fully inserted into the groove 40 projects out of the groove 40 in a direction facing toward the column 20. In the preferred embodiment of the present invention, for example, groove 40 has a depth of 0.6 mm (.025 inches) blow face 36 and the gasket has a thickness of 0.76 mm (.030 inches). Accordingly, in its uncompressed state, gasket 42 extends 0.013 mm (.0005) inches to the right, as viewed in Fig. 2, of the face 36 of flange 60 of coupling member 32. This permits column 20 to be pressed in a direction toward the cylindrical portion 34 to thereby compress the gasket 42 and provide a fluid tight seal between the two members at typical liquid chromatography pressures. This sealing of the coupling between the two members is further facilitated by assuring that face 38 of column 22 abuts at least a portion of the adjacent face of gasket 42 when column 22 and cylindrical portion 34 are in their proper abutting relationship as illustrated in Fig. 2.

In the preferred embodiment of the present invention, gasket 42 is made by a die punching process from a sheet of the perfluoroelastomer material which has a thickness substantially identical to that of the desired annular gasket.

Referring again to Fig. 3, the plane of the central face portion 46 of the coupler member 32 is recessed from the plane of the face 36 in its preferred embodiment by from about 0.13 mm to about 0.18 mm (.005 inch to about .007 inch). This recess is provided to ensure that a small gap will be formed between central face portion 46 and frit 30 when cartridge column 20 is pressed against coupler member 32 at which time gasket 42 is compressed so that its protrusion beyond face 36 is considerably reduced from its uncompressed state. This small gap forms a chamber or sample distribution cavity 48 between frit 30 and face portion 46, thereby providing a channel for liquid being pumped through the column to pass through between a central bore 50 and frit 30 in a substantially uniform manner. This is particularly advantageous because the liquid being tested thereby enters the packing material of column 20 in a substantially uniform concentration over the entire cross sectional area of the region of the column containing packing 26. A further advantage of having cavity 48 is that frit 30, which acts as a filter in this case, does not easily become subject to plugging caused by particulate and other foreign matter in the liquid being pumped through the column. By evenly distributing the liquid entering as well as leaving packing 26 over the entire surface of frit 30, the plugging problem is substantially reduced.

Referring now to Fig. 3, coupler member 32, illustrated in axial section, includes the cylindrical portion 34 described in conjunction with Fig. 2. This cylindrical portion 34 is disposed in Fig. 3 to the left of a radially extending flange 60, which has a back face 62. In the final assembly of the fitting according to the present invention, coupler member 32 is arranged to remain substantially rotationally stationary while remaining coupled to a collar member 80, which encircles coupler member 32 in a manner to be described hereinafter in greater detail.

Coupler member 32 includes a second cylindrical portion 70 disposed to the left of cylindrical portion 34, as seen in Fig. 3. Cylindrical portion 70 preferably is provided with two parallel flats suitable for engagement by a wrench, thereby permitting coupler 32 to be tightened onto an externally threaded supply pipe or the like (not shown), which is inserted into internally threaded bore 72. It will be understood that tools may be required for the attachment of coupler member 32 to a supply pipe but not for decoupling and changing the column. While a threaded connection is shown and described, it should be noted that other conventional forms of attachment may be used to couple a pipe to the inner surface of the bore 72.

The inner surface of the bore 72 in the region indicated at 76 gradually tapers inwardly in the direction of end face 46 until it merges with central bore 50. The specific configuration of this portion of the coupler member is not particularly critical and may take any suitable alternative physical design desired. In its preferred form the shape conforms to a 1.59 mm (1/16") chemical processing industrial connector and central bore 50 is preferably of a diameter which is approximately the same as the central fluid carrying bore of the inlet or outlet tube which is to be mounted in the couple member. Bore 50 is of a diameter and a length such as to not adversely affect the chromatographic analysis to be performed.

In the preferred embodiment of the present invention, coupler member 32 is made of a titanium alloy which does not corrode in the presence of typical liquid chromatography solvents. A typical diameter of cylindrical portion 34 of coupler member 32 is 7.6 mm (.300 inches).

Referring now to Fig. 4, collar member 80 of the fitting of the present invention is shown in axial section. Collar member 80 has an outer surface indicated generally at 82, which is suitably grooved or knurled so it may easily be grasped with an operator's hand. Collar member 80 is provided with a radially inwardly extending annular flange 84 which coacts with the mating radially outwardly extending flange 60 to connect coupling member 32 to cartridge column 20, as will be discussed more fully hereinafter. Extending to the right of flange 84, as viewed in Fig. 4, is a cylindrically shaped portion indicated generally at 96, which includes an internally threaded section 98 for coupling to an externally threaded section 102 of housing 99 (Fig. 5), which is adapted to encircle column 22, as best seen in Fig. 2.

Referring to Fig. 5, housing 99 comprises a cylindrical body 100 having external threading 102 at each end for engagement with respective collar members 80. The housing can be made of any suitable material capable of withstanding the mechanical stresses placed thereon and, because it does not come in direct contact with the liquid chromatography solvents, it need not necessarily be made of a material which is corrosion resistant to such solvents.

In a normal assembly operation threaded portions 72 of coupler members 32 are connected to the sample injector and the detector, respectively. One end of the cartridge column housing 99 is connected to one collar member 80 by screw threads 98 and mating screw threads 102. Cartridge column 20 is inserted into the housing and the other collar member is connected to the other end of the housing. Both collar members are rotated until the gaskets 42 engage the frits 30 at the cartridge column ends, respectively. A ring or bushing 104, Fig. 2, is interposed between each flange 84 and corresponding flange 60. The ring has a low coefficient of friction to facilitate the rotational movement between the respective collars 80 and coupler members 32 during assembly. A preferred material for the ring is Delrin.

A high pressure liquid seal is effected by twisting collar members 80 by hand in opposite directions until a strong resistance is felt. After assembly, collar members 80 are locked in position with respect to the associated coupler members 32 by the insertion of a Waldes "E" ring 106, or equivalent, in annular slots 108 (as shown in Fig. 3) provided for the purpose in coupler members 32. Inasmuch as collar members 80 can rotate while coupler members 32 remain rotationally stationary, abrasion between gasket members 42 and the ends of the cartridge column is minimized. It has been found that such hand tightening of the collar members exerts sufficient compression on the gasket as to provide a system which withstands pressures in excess of about 103N/mm² to about 138N/mm² (15,000 to about 20,000 pounds per square inch). Further, this new and improved assembly eliminates the necessity of disconnecting either the sample injector or the detector when changing columns. As described, an assembly according to the present invention makes it possible to change columns easily without the use of special tools.

Although a particular embodiment of the invention is herein disclosed for purposes of explanation, further modification thereof, after study of this specification, will be apparent to those skilled in the art to which the invention pertains. Reference should accordingly be had to the appended claims for determining the scope of the invention.

## Claims

1. A liquid chromatography column assembly (20) comprising:
a hollow cylindrical separation column (22) containing a packing material (26) constituting the stationary phase;
a liquid permeable discoid frit (30) mounted at each end of the column for retaining the packing material;
a column coupling assembly for each end of said column, including:
a tubular coupler member (32) having at one end a concentric radially outwardly extending annular flange (60) disposed coaxially with said column and with the front face (36) of the flange in confronting relation to one end of said column;
an annular gasket member (42) disposed on said coupler member (32);
a cylindrical collar member (80) having a radially inwardly extending flange (84) at one end and being disposed in coaxial relation to said coupler member (32), the radially inwardly extending flange (84) of said collar member (80) and the radially outwardly extending annular flange (60) of said coupler member (32) having radial dimensions such as to place the respective back faces (62) of said flanges (84,60) in apposition and the inner diameter of the collar member flange (84) being sufficient to accommodate passage of said tubular coupler member (32) except for the outwardly extending flange (60) thereof, said inwardly extending flange (84) of said collar member (80) coacting with the mating outwardly extending flange (60) of said coupler member (32); and
means (98,102) for threadedly coupling said collar member (80) to said column (22), the rotation of said collar member in one direction relative to said column is producing axial relative displacement therebetween and compression of said gasket (42) against the end of said column and circumferential portion of said frit (30),
**characterised in that**
said column assembly (20) further comprises a cylindrical housing (99) enveloping the column and said collar member (80) is disposed in coaxial relation to said housing and connected therewith by said threaded coupling means (98,102); and
said front face (36) of said outwardly extending flange (60) of said coupler member (32) contains a concentric annular groove (40) with said gasket (42) disposed therein and projecting beyond said front face, said groove being radially disposed to be in apposition to the end of said column (22) and the outermost circumferential portion of said frit (30) is compressing said gasket (42) against the end of said column (22) without substantial rotational displacement thereof.

2. A column coupling assembly according to Claim 1 further comprising a low friction ring interposed between the opposing back faces of said radially outwardly extending annular flange on said coupler member and said radially inwardly extending annular flange on said collar member.

3. The assembly according to Claim 2 further comprising means for locking said collar member in operative position with respect to said coupler member.

4. The assembly according to Claim 3 wherein said means for locking comprises an "E" ring positioned in an annular slot.

5. The assembly of Claim 1 wherein said coupler member faces have centrally recessed portions for forming sample distribution cavities adjacent said frit respectively to allow samples to be radially evenly distributed.

6. The assembly according to Claim 5 wherein said recess is between about 0.13 mm (.005 inches) and about 0.18 mm (.007 inches).

7. A column coupling assembly according to Claim 1 wherein said threadedly coupling means includes a threaded portion at an end of said cylindrical housing.

8. The assembly according to Claim 7 wherein said threadedly coupling means further include a threaded portion on said collar member which mates with the threaded portion on the cylindrical housing.

9. The assembly according to Claim 1 wherein said gasket member is fabricated from a perflouroelastomer.

## Patentansprüche

1. Flüssigkeitschromatographie-Säulenanordnung (20), die umfaßt:
eine hohle, zylindrische Trennsäule (22), die ein Füllmaterial (26) enthält, welches die stationäre Phase bildet;
eine flüssigkeitsdurchlässige, scheibenförmige Fritte (30), die zur Halterung des Füllmaterials an jedem Ende der Säule angebracht ist;
eine Säulen-Verbindungsanordnung für jedes Ende der Säule, die enthält:
ein röhrenförmiges Verbindungselement (32), das an einem Ende einen konzentrisch, sich radial nach außen erstreckenden ringförmigen Flansch (60) aufweist, der koaxial zu der Säule und mit der Vorderseite (36) des Flansches in gegenstehender Beziehung zu einem Ende der Säule angeordnet ist;
ein ringförmiges Dichtungselement (42), das auf dem Verbindungselement (32) angeordnet ist;
ein zylindrisches Einfassungselement (80), das an einem Ende einen sich radial nach innen erstreckenden Flansch (84) aufweist und in koaxialer Beziehung zu dem Verbindungselement (32) angeordnet ist, wobei der sich radial nach innen erstreckende Flansch (84) des Einfassungselements (80) und der radial sich nach außen erstreckende ringförmige Flansch (60) des Verbindungselements (32) derartige radiale Ausmaße besitzen, daß die entsprechenden Rückseiten (62) der Flansche (84, 60) in Anlage gebracht werden und der Innendurchmesser des Flansches (84) des Einfassungselements ausreicht, um den Durchtritt des röhrenförmigen Verbindungselements (31) außer dessen sich nach außen erstreckenden Flansch (60) aufzunehmen, wobei der sich nach innen erstreckende Flansch (84) des Einfassungselements (80) mit dem passenden sich auswärts erstreckenden Flansch (60) des Verbindungselements (32) zusammenwirkt; und
Mittel (98, 102) zur Gewindeverbindung des Einfassungselements (80) an die Säule (22), wobei die Drehung des Einfassungselements in eine Richtung bezüglich der Säule dazwischen eine axiale relative Versetzung und ein Zusammendrücken der Dichtung (42) gegen das Ende der Säule und einen Umfangsbereich der Fritte (30) erzeugt,
**dadurch gekennzeichnet**,
daß die Säulenanordnung (20) ferner ein zylindrisches Gehäuse (99) umfaßt, das die Säule ummantelt, und das Einfassungselement (80) in koaxialer Beziehung zu dem Gehäuse angeordnet und mit diesem durch das Gewindeverbindungsmittel (98, 102) verbunden ist; und
daß die Vorderseite (36) des sich nach nach außen erstreckenden Flansches (60) des Verbindungselements (32) eine konzentrische, ringförmige Rille (40) mit der in dieser angeordneten und über die Vorderseite hinausragenden Dichtung (42) enthält, wobei die Rille radial angeordnet ist, um sich in Anlage mit dem Ende der Säule (22) zu befinden, und der äußerste Umfangsbereich der Fritte (30) die Dichtung (42) gegen das Ende der Säule (22) ohne eine wesentliche drehende Versetzung von dieser drückt.

2. Säulenverbindungsanordnung gemäß Anspruch 1, die ferner einen Ring niedriger Reibung umfaßt, der zwischen den gegenüberliegenden Rückseiten des sich radial nach außen erstreckenden, ringförmigen Flansches auf dem Verbindungselement und des radial sich nach innen erstreckenden, ringförmigen Flansches auf dem Einfassungselement angeordnet ist.

3. Anordnung gemäß Anspruch 2, die ferner Mittel zur Verriegelung des Einfassungselements in einer Betriebsposition in bezug auf das Verbindungselement umfaßt.

4. Anordnung gemäß Anspruch 3, wobei das Mittel zur Verriegelung einen "E"-Ring umfaßt, der in einem ringförmigen Schlitz angeordnet ist.

5. Anordnung gemäß Anspruch 1, wobei die Verbindungselementseiten mittig mit Ausnehmungen versehene Bereiche zur Bildung von an die Fritte entsprechend angrenzenden Probenverteilungsvertiefungen aufweisen, um zu ermöglichen, daß die Proben radial gleichmäßig verteilt werden.

6. Anordnung gemäß Anspruch 5, bei der die Ausnehmung zwischen ungefähr 0,13 mm (0,005 Inch) und ungefähr 0,18 mm (0,007 Inch) beträgt.

7. Säulenverbindungsanordnung gemäß Anspruch 1, bei der das Gewindeverbindungsmittel an einem Ende von dem zylindrischen Gehäuse einen Gewindebereich enthält.

8. Anordnung gemäß Anspruch 7, bei der das Gewindeverbindungsmittel weiterhin einen Gewindebereich an dem Einfassungselement enthält, der zu dem Gewindebereich an dem zylindrischen Gehäuse paßt.

9. Anordnung gemäß Anspruch 1, bei der das Dichtungselement aus einem Perfluorelastomer hergestellt ist.

## Revendications

1. Ensemble colonne pour chromatographie liquide (20) comprenant :
une colonne cylindrique creuse de séparation (22) contenant un matériau de garniture (26) constituant la phase stationnaire;
une fritte discoïde perméable aux liquides (30) montée a chaque extrémité de la colonne pour retenir le matériau de garniture;
un ensemble d'accouplement de colonne pour chaque extrémité de ladite colonne, comprenant :
un élément tubulaire d'accouplement (32) comportant sur une extrémité une bride annulaire concentrique se prolongeant radialement vers l'extérieur (60) disposée coaxialement à ladite colonne et à la face avant (36) de la bride en opposition à une extrémité de ladite colonne;
un élément joint annulaire (42) disposé sur ledit élément d'accouplement (32);
un élément bague cylindrique (80) comportant une bride se prolongeant radialement vers l'intérieur (84) sur une extrémité et étant disposée coaxialement par rapport au dit élément d'accouplement (32), la bride se prolongeant radialement vers l'intérieur (84) du dit élément bague (80) et la bride annulaire s'étendant radialement vers l'extérieur (60) du dit élément d'accouplement (32) ayant des dimensions radiales telles qu'elles placent en opposition les faces arrières respectives (62) des dites brides (84, 60) et le diamètre intérieur de la bride de l'élément bague (84) étant suffisant pour permettre le passage du dit élément tubulaire d'accouplement (32) à l'exception de la bride se prolongeant vers l'extérieur (60) de celui-ci, ladite bride s'étendant vers lintérieur (84) du dit élément bague (80) agissant conjointement avec la bride d'accouplement s'étendant vers l'extérieur (60) du dit élément d'accouplement (32); et
des moyens (98, 102) pour accoupler par pas de vis ledit élément bague (80) à ladite colonne (22), la rotation du dit élément bague dans un sens par rapport a ladite colonne produit un déplacement axial relatif entre eux et la compression du dit joint (42) contre l'extrémité de ladite colonne et une partie circonférentielle de ladite fritte (30),
caractérisé en ce que
ledit ensemble colonne (20) comprend en outre un logement cylindrique (99) enveloppant la colonne et ledit élément bague (80) est disposé coaxialement au dit logement et connecté a celui-ci par lesdits moyens d'accouplement par pas de vis (98, 102); et
ladite face avant (36) de ladite bride s'étendant vers l'extérieur (60) du dit élément d'accouplement (32) comporte une gorge concentrique annulaire (40) avec ledit joint (42) placé à l'intérieur de celle-ci, et dépassant ladite face avant, ladite gorge étant disposée radialement de manière à ête en opposition avec l'extrémité de ladite colonne (22) et la partie extrême extérieure circonférentielle de ladite fritte (30) compresse ledit joint (42) contre l'extrémité de ladite colonne (22) sans déplacement substantiel en rotation de celle-ci.

2. Ensemble accouplement de colonne selon la revendication 1 comprenant en outre une bague à faible friction placée entre les faces arrières en opposition de ladite bride annulaire s'étendant radialement vers l'extérieur sur ledit élément d'accouplement et ladite bride annulaire s'étendant radialement vers l'intérieur sur ledit élément bague.

3. L'ensemble selon la revendication 2 comprenant en outre des moyens de blocage en position de fonctionnement du dit élément bague par rapport au dit élément d'accouplement.

4. L'ensemble selon la revendication 3 dans lequel lesdits moyens de blocage comprennent un circlip mis en position dans une rainure annulaire.

5. L'ensemble de la revendication 1 dans lequel lesdites faces de l'élément d'accouplement comportent des parties centrales en creux pour former des cavités de distribution d'échantillons respectivement adjacentes à ladite fritte afin de permettre aux échantillons d'être régulièrement distribués radialement.

6. L'ensemble selon la revendication 5 dans lequel une dite partie en creux a une dimension comprise entre 0,13 mm (0,005") et 0,18 mm (0,007").

7. Ensemble accouplement de colonne selon la revendication 1 dans lequel des dits moyens d'accouplement par pas de vis comprennent une partie filetée à une extrémité du dit logement cylindrique.

8. L'ensemble selon la revendication 7 dans lequel les dits moyens d'accouplement par pas de vis comprennent en outre une partie filetée sur ledit élément bague qui s'adapte à la partie filetée du logement cylindrique.

9. L'ensemble selon la revendication 1 dans lequel ledit élément joint est en élastomère perfluorique.
